# EUROPÄISCHE PATENTSCHRIFT

(11) **EP 1 981 817 B1**
(45) Veröffentlichungstag und Bekanntmachung des Hinweises auf die Patenterteilung: **19.06.2013**
(21) Anmeldenummer: 07711463.5
(22) Anmeldetag: 07.02.2007
(51) Int. Cl.: C02F 1/28

(54) **WECHSELANZEIGE FÜR EINE WASSERFILTERVORRICHTUNG**
CHANGEABLE INDICATOR FOR A WATER FILTERING DEVICE
AFFICHAGE REVERSIBLE POUR DISPOSITIF DE FILTRATION D'EAU

(30) Priorität: 09.02.2006 DE 102006006230
(43) Veröffentlichungstag der Anmeldung: 22.10.2008
(73) Patentinhaber: BWT water+more GmbH, 5310 Mondsee (AT)
(72) Erfinder: BENDER, Stefan, 65187 Wiesbaden (DE)
(74) Vertreter: Herden, Andreas F.
(86) Internationale Anmeldenummer: PCT/EP2007/001032
(87) Internationale Veröffentlichungsnummer: WO 2007/090622

(56) Entgegenhaltungen:
- WO-A-02/42218
- WO-A-2005/019115
- DE-U1- 29 811 074
- US-A1- 2005 229 699

## Beschreibung

### Gebiet der Erfindung

Die Erfindung betrifft eine Wechselanzeige für eine Wasserfiltervorrichtung.

### Hintergrund der Erfindung

Wechselanzeigen für Wasserfiltervorrichtungen, insbesondere im Haushaltsbereich sind bekannt.

So zeigt beispielsweise die EP 0 891 952 (BRITA) eine Wechselanzeige für eine Wasserfiltervorrichtung, welche Mittel zum Zählen der Anzahl der Betätigungen eines Öffnungsmechanismus sowie einen Zeitmesser aufweist und so errechnet, wann eine in der Wasserfiltervorrichtung angeordnete Filterpatrone auszutauschen ist. Über eine optische Anzeige wird signalisiert, wenn die Filterpatrone ausgetauscht werden muss. Nach Austauschen der Filterpatrone kann der Benutzer eine Rücksetztaste drücken, um die Anzeige wieder in den Ausgangszustand zurück zu versetzen.

Nachteilig an einer derartig bekannten Wechselanzeige für eine Wasserfiltervorrichtung hat sich gezeigt, dass ein derartiger Rücksetzschalter empfindlich gegen Fehlbedienungen ist, so wird er häufig von Kindern versehentlich bedient. Darüber hinaus ist ein derartiger Rücksetzschalter aufwendig und lässt sich nur schwer hinreichend gegen Feuchtigkeit schützen.

### Aufgabe der Erfindung

Der Erfindung liegt demgegenüber die Aufgabe zugrunde, eine Wechselanzeige für eine Wasserfiltervorrichtung bereitzustellen, welche die vorstehend genannten Nachteile des Standes der Technik verringert und insbesondere eine einfachere und sichere Bedienung ermöglicht.

Weiter ist Aufgabe der Erfindung, eine Wechselanzeige bereitzustellen, welche sich auf einfache Weise wasserdicht versiegeln lässt und insbesondere geeignet ist, um das Bauteil, in dem sich die Wechselanzeige befindet, in einer Spülmaschine zu reinigen.

Ein weitere Aufgabe der Erfindung ist es, die Genauigkeit der Wechselanzeige zu verbessern.

Nach einer weiteren Aufgabe der Erfindung soll das Rücksetzen der Wechselanzeige zumindest teilweise automatisiert werden.

### Kurze Beschreibung der Erfindung

Die Aufgabe der Erfindung wird bereits durch eine

Wechselanzeige für eine Wasserfiltervorrichtung gemäß einem der unabhängigen Ansprüche erreicht.

Bevorzugte Ausführungsformen und Weiterbildung der Erfindung sind den jeweiligen Unteransprüchen zu entnehmen.

Gemäß der Erfindung ist eine Wechselanzeige für eine Wasserfiltervorrichtung vorgesehen, wobei die Wasserfiltervorrichtung eine austauschbare Filterpatrone umfasst, einen Deckel mit einer Einfüllöffnung, welche einen Verschlussmechanismus aufweist, und die Wechselanzeige mit dem Verschlussmechanismus zusammenwirkt.

Unter Zusammenwirken wird im Sinne der Erfindung verstanden, dass sich das Öffnen und Schließen des Verschlussmechanismus auf die Wechselanzeige auswirkt, der Art dass zumindest unter anderem anhand des Öffnens und Schließens des Verschlussmechanismus die Wechselanzeige errechnet, wann die Filterpatrone auszutauschen ist.

Erfindungsgemäß ist die Wechselanzeige über eine Betätigung des Verschlussmechanismus in eine Ausgangsstellung rücksetzbar. Wird die Wechselanzeige über den Verschlussmechanismus selbst zurückgesetzt, ist kein zusätzlicher Rücksetzschalter notwendig. Eine derartig ausgebildete Wechselanzeige ist somit billiger herzustellen, ist zuverlässiger und sicherer gegen Fehlbedienung.

Das Rücksetzen der Wechselanzeige kann beispielsweise durch mehrmalige Betätigung des Verschlussmechanismus in einem vorgegebenen Zeitintervall erfolgen, wie es bei einer besonderen Ausführungsform der Erfindung vorgesehen ist. So kann ein Rücksetz-Code eingegeben werden, beispiels weise muss innerhalb von zehn Sekunden der Verschlussmechanismus fünfmal hintereinander bewegt werden, um die Wechselanzeige zurückzusetzen. Werden die zehn Sekunden überschritten, fährt die Wechselanzeige wieder in ihren Normalzustand zurück, das heißt ein Rücksetzen ist dann erst wieder möglich, wenn wiederum innerhalb von zehn Sekunden der Verschlussmechanismus fünfmal betätigt wird.

Unter Verschlussmechanismus wird im Sinne der Anmeldung nicht notwendigerweise ein Mechanismus verstanden, welcher den Deckel der Wasserfiltervorrichtung beziehungsweise die Wasserfiltervorrichtung an sich dicht verschließt, sondern es kann sich hierbei auch um eine einfache Abdeckung handeln, welche eher eine rein ästhetische Funktion hat oder Wasserfiltervorrichtung vor Staub schützen soll.

Bei einer besonderen Ausführungsform der Erfindung umfasst der Verschlussmechanismus einen Schieber.

Die Betätigung des Verschlussmechanismus erfolgt vorzugsweise über einen magnetisch gesteuerten Schalter, insbesondere über einen Reed-Schalter. Ein derartiger magnetisch betätigbarer Schalter hat den Vorteil, dass er vollständig verkapselt werden kann und nicht mechanisch mit anderen Bauteilen zusammenwirkt. Um den Schalter zu betätigen, kann dann an einer geeigneten Stelle des Gehäuses beziehungsweise des Deckels ein Magnet angeordnet sein. So wird der Schalter berührungslos betätigt.

Vorzugsweise wird der Schalter im Wesentlichen in dem Schieber angeordnet. Insbesondere ist ein Reed-Schalter im Schieber angeordnet, wohingegen der Magnet, der dem Reed-Schalter eine Anfangs- oder Endstellung liefert, im Deckel oder im Gehäuse der Wasserfiltervorrichtung angeordnet ist.

Der Schalter ist bei einer bevorzugten Ausführungsform der Erfindung wassergeschützt, insbesondere ist er in einem wasserdichten Kunststoffgehäuse angeordnet und wirkt mit einem am Deckel angeordneten Magneten zusammen. So ist es möglich, die Wechselanzeige komplett in Kunststoff zu vergießen oder durch eine Dichtung abgedichtet einzubauen, so dass ein Deckel für eine Wasserfiltervorrichtung mit einer erfindungsgemäßen Wechselanzeige sogar in der Spülmaschine gereinigt werden kann.

Um anzuzeigen, wann die Filterpatrone gewechselt werden muss, umfasst die Wechselanzeige vorzugsweise ein Display, insbesondere ein LCD-Display. Derartige LCD-Display's sind preisgünstig und haben einen geringen Stromverbrauch.

So kann eine derartige Wechselanzeige jahrelang mit einer einzigen Batterie, insbesondere einer Knopfzelle auskommen.

Das Display ist vorzugsweise Teil der Wechselanzeige und als ein elektronisches Bauteil insbesondere in dem Schieber des Deckels angeordnet.

Bei einer Weiterbildung der Erfindung ist der Deckel derart ausgebildet, dass das Display bei geschlossenem Verschlussmechanismus verdeckt ist.

So stört die Wechselanzeige nicht die ästhetische Formgebung der Wasserfiltervorrichtung. Dies lässt sich insbesondere deshalb leicht erreichen, da kein zusätzlicher Rücksetzschalter notwendig ist.

Der notwendig werdende Austausch der Filterkartusche wird vorzugsweise über ein optisches Signal angezeigt. Ein derartiges optisches Signal kann auch eine Skala umfassen, nach der beispielsweise der Verbrauch der Filterkartusche beispielsweise in Prozent angezeigt wird.

Bei einer Weiterbildung der Erfindung ist die Wechselanzeige bei Nichtbetätigung oder nach einer vorgegebenen Zeitspanne nach Betätigung in eine Schlafstellung versetzbar, bei welcher insbesondere das Display ausgeschaltet wird und so der Stromverbrauch erheblich herabgesetzt wird.

Vorzugsweise wird die Schlafstellung durch das Schließen des Verschlussmechanismus aktiviert.

Alternativ oder in Kombination kann die Schlafstellung auch durch einen Zeitgeber aktiviert werden.

Bei einer Weiterbildung der Erfindung wirkt die Wechselanzeige mit einem vorzugsweise in der Wechselanzeige integrierten Zeitgeber zusammen. So kann die Anzeige eines notwendigen Filteraustausches nicht nur von der Anzahl der Betätigungen des Verschlussmechanismus, sondern auch von der abgelaufenen Zeit abhängig gemacht werden.

Bei einer bevorzugten Ausführungsform der Erfindung umfasst die Wechselanzeige zumindest einen integrierten Schaltkreis, insbesondere einen Mikroprozessor.

Insbesondere sind sämtliche wesentlichen Komponenten der Wechselanzeige wie Stromversorgung, Elektronik und Display auf einer einzigen Platine angeordnet, welche dann in einem wasserdichten Kunststoffgehäuse, welches beispielsweise Bestandteil eines Verschlussmechanismus sein kann, integriert ist.

Die Erfindung betrifft des Weiteren eine Wechselanzeige, insbesondere eine Wechselanzeige mit einem oder mehreren weiteren Merkmalen gemäß vorstehend beschriebenen Ausführungsformen der Erfindung, wobei die Wechselanzeige eine Vorrichtung zur Erfassung der Abnahme des Deckels aufweist und die Wechselanzeige mit der Vorrichtung zur Erfassung der Abnahme des Deckels zusammenwirkt.

Eine derartig ausgebildete Wechselanzeige kann beispielsweise aus der Abnahme des Deckels darauf schließen, dass die Filterpatrone ausgetauscht wurde und so wird die Wechselanzeige in die Ausgangsstellung zurück versetzt. Alternativ kann die Vorrichtung zur Erfassung der Abnahme des Deckels auch den Verschlussmechanismus ersetzen.

Gemäß einer weiteren Alternative umfasst die Wechselanzeige, wie es ebenfalls Gegenstand der Erfindung ist, eine Vorrichtung zur Erfassung der Entfernung der Filterpatrone, wobei die Wechselanzeige mit der Vorrichtung zur Erfassung der Entfernung der Filterpatrone zusammenwirkt.

Die Erfindung betrifft des Weiteren eine Wechselanzeige für eine Wasserfiltervorrichtung, welche mit einer Einrichtung zur Messung des Wasserstandes in dem zur Wasserfiltervorrichtung zugehörigen Behälter zusammenwirkt.

So kann die Genauigkeit einer derartigen Wechselanzeige wesentlich verbessert werden, da derartige Wasserfiltervorrichtungen, insbesondere bei Verwendung im Haushaltsbereich nicht notwendigerweise beim Öffnen des Deckels beziehungsweise der Einfüllöffnung vollständig entleert sind und dann wieder gefüllt werden, sondern häufig nachgeschüttet wird oder der Behälter nicht ganz gefüllt wird. Diese Verwendungszustände kann mit einer Wasserstandsanzeige erfasst werden.

Eine derartige Wechselanzeige kann noch weitere Merkmale aufweisen, wie es gemäß den vorstehend beschriebenen Wechselanzeigen für Wasserfiltervorrichtungen beschrieben ist.

bei einer bevorzugten Ausführungsform der Erfindung umfasst die Einrichtung zur Messung des Wasserstandes einen Ultraschallgeber, welcher insbesondere im Deckel der Wasserfiltervorrichtung angeordnet sein kann. Über derartige Ultraschallgeber lässt sich auf besonders einfache Weise eine kompakte Messeinrichtung realisieren, über welche die Höhe des Wasserstandes hinreichend genau bestimmt werden kann.

Die Erfindung betrifft des Weiteren eine Wechselanzeige für eine Wasserfiltervorrichtung, welche einen Schalter umfasst, der die Betätigung des Verschlussmechanismus erfasst, wobei der Schalter nach einer Betätigung für ein vorgegebenes Zeitintervall gesperrt ist.

Ein derartiger Schalter wirkt mit der Wechselanzeige zusammen. Durch die Sperrung des Schalters für ein bestimmtes Zeitintervall nach einer Betätigung wird verhindert, dass bei Befüllung der Wasserfiltervorrichtung durch Fehlbedienung, etwa durch mehrmaliges Öffnen und Schließen des Verschlussmechanismus, die Wechselanzeige weiter zählt und so einen zu frühen Austausch der Filterpatrone signalisiert.

Die derartige Wechselanzeige kann noch mit einem oder mehreren weiteren Merkmalen gemäß vorstehend beschriebenen Wechselanzeigen kombiniert werden.

### Kurzbeschreibung der Zeichnungen

Die Erfindung soll im Folgenden anhand der Zeichnungen Fig. 1 bis Fig. 6 näher erläutert werden, welche eine erfindungsgemäße Wasserfiltervorrichtung anhand eines Ausführungsbeispiels zeigen.
- Fig. 1: zeigt eine perspektivische Ansicht einer erfindungsgemäßen Wasserfiltervorrichtung,
- Fig. 2: zeigt eine Detailansicht des Deckels einer erfindungsgemäßen Wasserfiltervorrichtung,
- Fig. 3: zeigt eine perspektivische Detailansicht eines Schiebers, welcher Teil des Deckels einer erfindungsgemäßen Wasserfiltervorrichtung ist,
- Fig. 4: zeigt eine weitere Ansicht des Schiebers aus Fig. 3,
- Fig. 5: zeigt schematisch die wesentlichen Bestandteile einer erfindungsgemäßen Wechselanzeige,
- Fig. 6: zeigt eine Wechselanzeige in einer weiteren Ansicht.

### Detaillierte Beschreibung der Zeichnungen

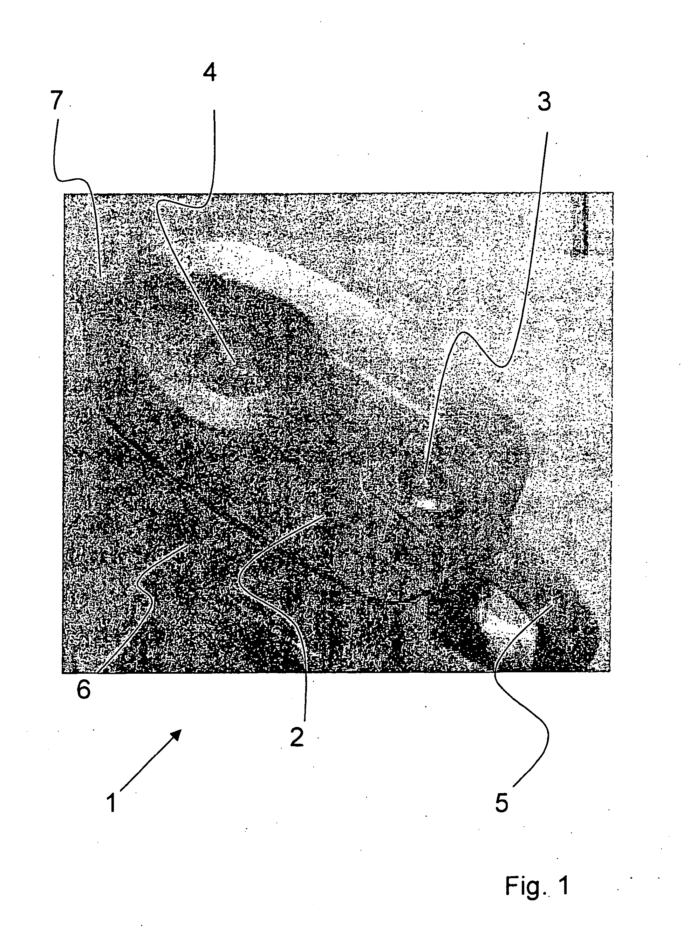

Bezug nehmend auf Fig. 1 werden die wesentlichen Bestandteile einer Wasserfiltervorrichtung 1 näher erläutert.

Die Wasserfiltervorrichtung 1 umfasst einen abnehmbaren Deckel 2, welcher einen Verschlussmechanismus aufweist. Der Verschlussmechanismus umfasst einen Schieber 3, welcher im Deckel 2 beweglich angeordnet ist. Über den Schieber 3 wird die Einfüllöffnung 4 verschlossen. Weiter umfasst die Wasserfiltervorrichtung einen Behälter 6, einen Griff 5 und einen Auslauf 7, sowie eine Filterpatrone (nicht dargestellt).

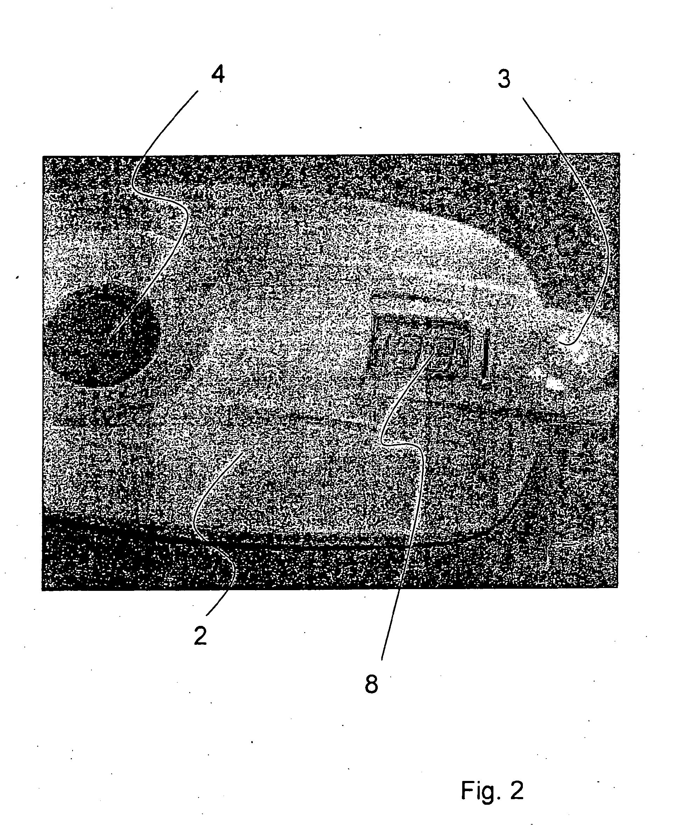

Bezug nehmend auf Fig. 2, die den Deckel 2 der Wasserfiltervorrichtung aus Fig. 1 in Detailansicht zeigt, ist zu erkennen, wie die Einfüllöffnung 4 geöffnet ist. Der Schieber 3 ist zurückgezogen, so dass die Einfüllöffnung 4 freigegeben ist. Gleichzeitig wird mit dem Zurückziehen des Schiebers 3 ein Display 8 freigegeben, welches Bestandteil der im Deckel 2 angeordneten Wechselanzeige ist.

Zum Rücksetzen der Anzeige des Displays 8 muss der Schieber 3 innerhalb von 10 s betätigt werden. Wird das Zeitintervall überschritten, fällt die Anzeige wieder in den normalen Modus zurück.

Um zu verhindern, dass die Anzeige bei mehrmaliger Betätigung des Schiebers weiter zählt, ist der Zähler der Wechselanzeige (nicht dargestellt) nach einmaliger Betätigung für ein vorgegebenes Zeitintervall gesperrt.

Mit Zurückziehen des Schiebers 3 wird das Display 8 der Wechselanzeige aktiviert. Mit dem Vorschieben des Schiebers 3 wird das Display 8 wieder deaktiviert, die Wechselanzeige fällt in eine Schlafstellung zurück.

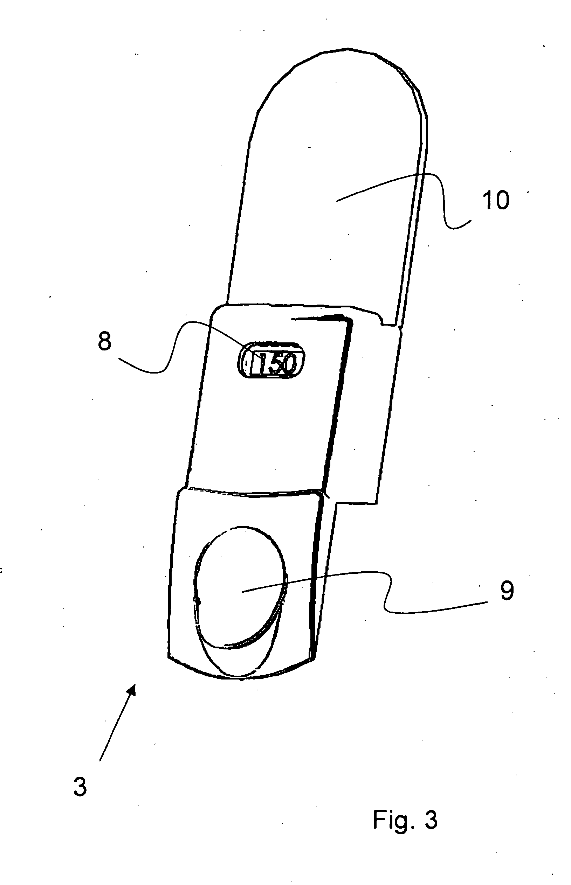

Fig. 3 zeigt eine perspektivische Ansicht des im Deckel (nicht dargestellt) angeordneten Schiebers 3. Der Schieber 3 umfasst einen Verschluss 10 zum Schließen der Einfüllöffnung (nicht dargestellt) sowie einen Griff 9, über welchen leicht, beispielsweise mittels des Daumens, der Schieber vor- und zurückgeschoben werden kann. Im Schieber integriert sind die wesentlichen Bestandteile der Wechselanzeige. Zu erkennen ist hier das Display 8 der Wechselanzeige, welches als LCD-Display ausgebildet ist. Die Wechselanzeige ist vollständig in den Schieber integriert und umfasst einen Reed-Schalter, welcher über einen im Deckel angeordneten Magneten (nicht dargestellt) betätigt wird.

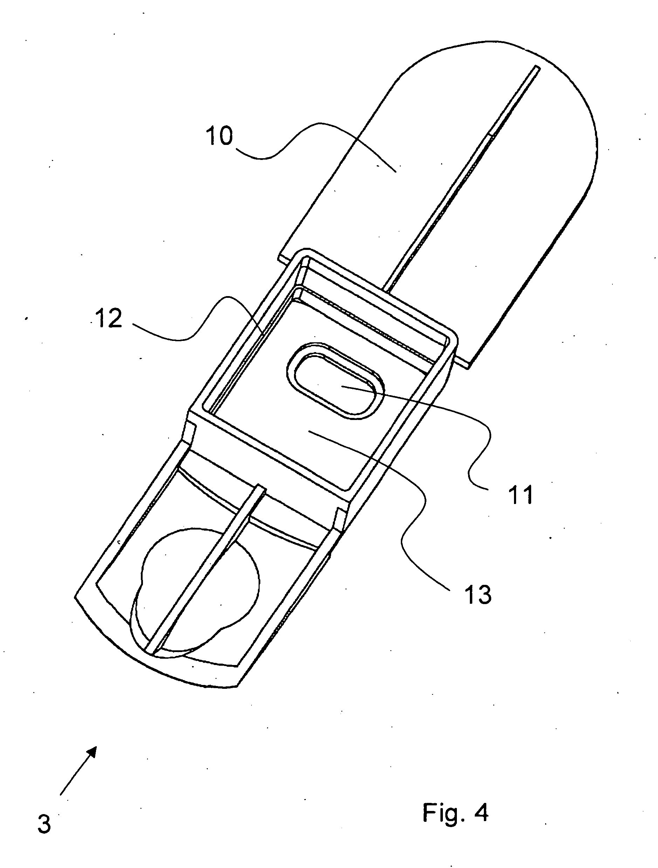

Fig. 4 zeigt den Schieber 3 in einer weiteren Ansicht, wobei hier die Wechselanzeige herausgenommen ist. Der Schieber 3 ist im Wesentlichen einstückig ausgebildet und umfasst einen Verschluss 10. Zur Aufnahme der Wechselanzeige (nicht dargestellt) umfasst der Schieber 3 ein Gehäuse mit einer Aussparung 13 zur Aufnahme der Wechselanzeige. Weiter umfasst das Gehäuse ein Fenster 11, durch welches das LCD-Display der Wechselanzeige (nicht dargestellt) sichtbar ist. Das Fenster wird durch eine Plexiglasscheibe gebildet, welche mit einer Dichtung 12 in die Aussparung eingebracht ist.

Nach Einbringen der Wechselanzeige wird die Aussparung 13 mit einer Kunststoffplatte Ultraschall-verschweißt und ist so vollständig versiegelt, so dass der Deckel der Wasserfiltervorrichtung in der Spülmaschine gereinigt werden kann.

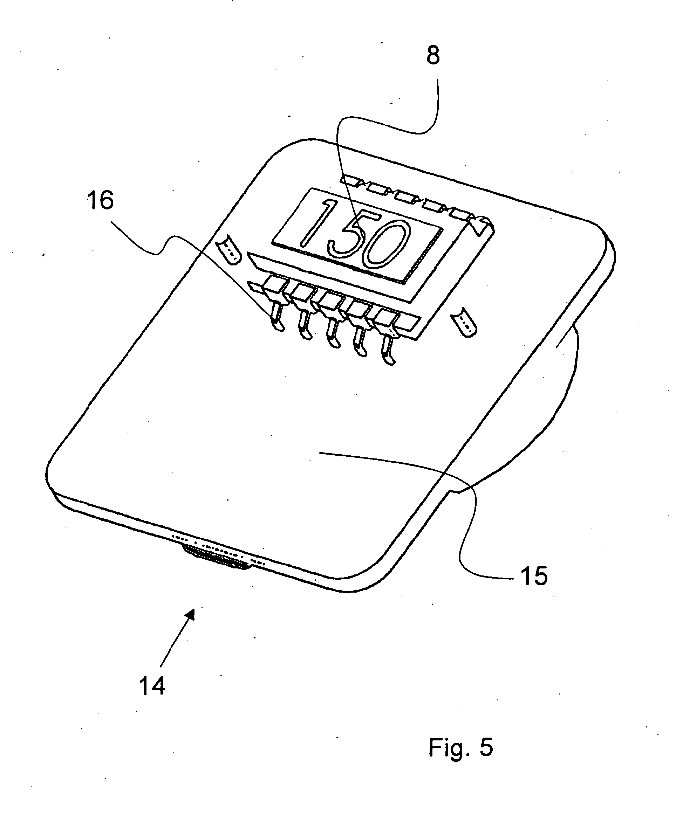

Fig. 5 zeigt schematisch ein Ausführungsbeispiel einer erfindüngsgemäßen Wechselanzeige 14. Die Wechselanzeige 14 umfasst eine Platine 15, welche auf der Vorderseite ein LCD-Display 8 aufweist. Das LCD-Display 8 umfasst Kontakte 16, welche in der Platine 15 eingelötet sind.

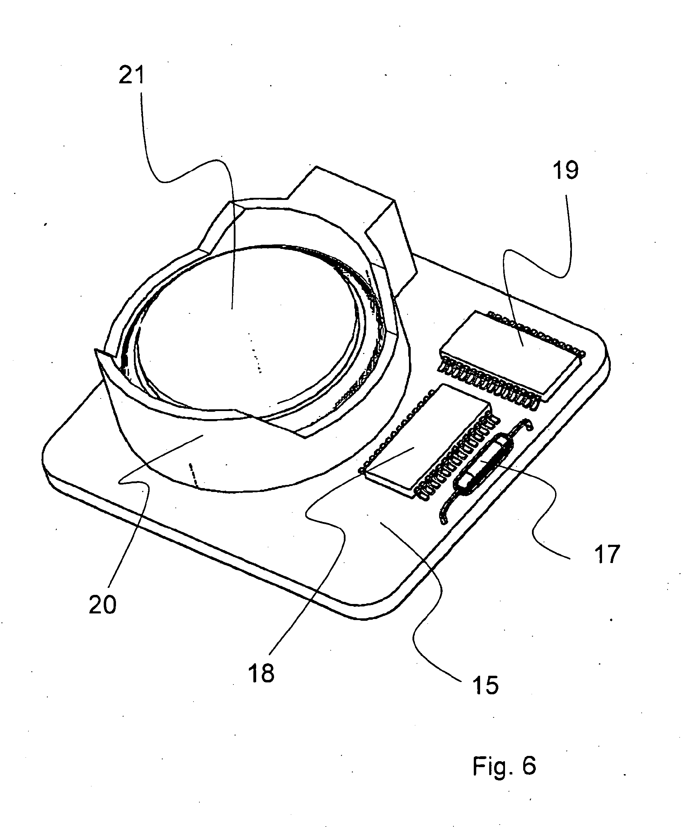

Fig. 6 zeigt eine schematische Ansicht der Rückseite der Wechselanzeige aus Fig. 5, anhand welcher vor allem die elektronischen Komponenten näher erläutert werden.

Auf der Rückseite der Platine 15 ist ein Reed-Kontat 17 angeordnet. Der Reed-Kontakt 17 ist dazu ausgebildet, mit einem Magneten im Deckel der Wasserfiltervorrichtung (nicht dargestellt) zusammenzuwirken. Der Reed-Kontakt 17 ist auch mit einem Reed-Relais 18 verbunden und bildet somit einen Reed-Schalter aus. Weiter ist auf der Platine ein integrierter Schaltkreis 19 angeordnet, welcher zur Ermittlung des notwendig werdenden Austausches der Filterkartusche mit dem Reed-Schalter zusammenwirkt. Der integrierte Schaltkreis 19, welcher als Mikroprozessor ausgebildet sein kann, wirkt vorzugsweise noch mit einem Schwingquarz (nicht dargestellt) als Zeitgeber zusammen.

Zur Stromversorgung ist auf der Platine 15 in einem Gehäuse 20 eine Knopfzelle 21 angeordnet, welche eine Betriebsdauer von mehreren Jahren ermöglicht.

Die Erfindung ist nicht auf eine Kombination vorstehend beschriebener Merkmale beschränkt, sondern es versteht sich, dass der Fachmann sämtliche Merkmale der Erfindung, soweit sinnvoll, kombinieren wird.

**Bezugszeichenliste:**

| | |
|---|---|
| 1 | Wasserfiltervorrichtung |
| 2 | Deckel |
| 3 | Schieber |
| 4 | Einfüllöffnung |
| 5 | Griff |
| 6 | Behälter |
| 7 | Auslauf |
| 8 | Display |
| 9 | Griff |
| 10 | Verschluss |
| 11 | Fenster |
| 12 | Dichtung |
| 13 | Aussparung |
| 14 | Wechselanzeige |
| 15 | Platine |
| 16 | Kontakt |
| 17 | Reedkontakt |
| 18 | Reed-Relais |
| 19 | IC |
| 20 | Gehäuse |
| 21 | Knopfzelle |

## Patentansprüche

1. Wechselanzeige für eine Wasserfiltervorrichtung mit einer austauschbaren Filterpatrone, einem Deckel mit zumindest einer Einfüllöffnung, welche einen Verschlussmechanismus aufweist,
wobei die Wechselanzeige mit dem Verschlussmechanismus zusammenwirkt, indem sich das Öffnen und Schließen des Verschlussmechanismus auf die Wechselanzeige auswirkt, der Art dass zumindest unter anderem anhand des Öffnens und Schließens des Verschlussmechanismus die Wechselanzeige errechnet, wann die Filterpatrone auszutauschen ist,
**dadurch gekennzeichnet, dass**
die Wechselanzeige über eine Betätigung des Verschlussmechanismus in eine Ausgangsstellung rücksetzbar ist.

2. Wechselanzeige für eine Wasserfiltervorrichtung nach Anspruch 1, **dadurch gekennzeichnet, dass** die Wechselanzeige über eine mehrmalige Betätigung des Verschlussmechanismus in einem vorgegebenen Zeitintervall rücksetzbar ist.

3. Wechselanzeige für eine Wasserfiltervorrichtung nach einem der vorstehenden Ansprüche, **dadurch gekennzeichnet, dass** der Verschlussmechanismus einen Schieber umfasst.

4. Wechselanzeige für eine Wasserfiltervorrichtung nach einem der vorstehenden Ansprüche, **dadurch gekennzeichnet, dass** die Betätigung des Verschlussmechanismus über einen Schalter, insbesondere einen Reedschalter erfolgt.

5. Wechselanzeige für eine Wasserfiltervorrichtung nach dem vorstehenden Anspruch, **dadurch gekennzeichnet, dass** der Schalter im Wesentlichen in dem Schieber angeordnet ist.

6. Wechselanzeige für eine Wasserfiltervorrichtung nach einem der Ansprüche 4 bis 5, **dadurch gekennzeichnet, dass** der Schalter mit einem Magneten, insbesondere einem am Deckel angeordneten Magneten, zusammenwirkt.

7. Wechselanzeige für eine Wasserfiltervorrichtung nach einem der Ansprüche 4 bis 6, **dadurch gekennzeichnet, dass** der Schalter berührungslos betätigbar ist.

8. Wechselanzeige für eine Wasserfiltervorrichtung nach dem vorstehenden Anspruch, **dadurch gekennzeichnet, dass** ein LCD- Display in einem Schieber angeordnet ist.

9. Wechselanzeige für eine Wasserfiltervorrichtung nach dem vorstehenden Anspruch, **dadurch gekennzeichnet, dass** das Display bei geschlossenem Verschlussmechanismus verdeckt ist.

10. Wechselanzeige für eine Wasserfiltervorrichtung nach einem der vorstehenden Ansprüche, **dadurch gekennzeichnet, dass** die Wechselanzeige bei Nichtbetätigung in eine Schlafstellung fällt, in welcher insbesondere das Display ausschaltbar ist.

11. Wechselanzeige für eine Wasserfiltervorrichtung nach einem der vorstehenden Ansprüche, **dadurch gekennzeichnet, dass** die Wechselanzeige zumindest einen integrierten Schaltkreis (IC), insbesondere einen Mikroprozessor umfasst.

12. Wechselanzeige, nach einem der vorstehenden Ansprüche,
**dadurch gekennzeichnet, dass**
die Wechselanzeige eine Vorrichtung zur Erfassung der Abnahme des Deckels aufweist und die Wechselanzeige mit der Vorrichtung zur Erfassung der Abnahme des Deckels zusammenwirkt.

13. Wechselanzeige, nach einem der vorstehenden Ansprüche,
**dadurch gekennzeichnet, dass**
die Wechselanzeige eine Vorrichtung zur Erfassung der Entfernung der Filterpatrone umfasst und die Wechselanzeige mit der Vorrichtung zur Erfassung der Entfernung der Filterpatrone zusammenwirkt.

14. Wechselanzeige, nach einem der vorstehenden Ansprüche, ,
**dadurch gekennzeichnet, dass**
die Wechselanzeige mit einer Einrichtung zur Messung des Wasserstandes in einem zur Wasserfiltervorrichtung zugehörigen Behälter zusammenwirkt.

15. Wechselanzeige für eine Wasserfiltervorrichtung, nach einem der vorstehenden Ansprüche,
**dadurch gekennzeichnet, dass** das Zusammenwirken des Schalters mit der Wechselanzeige nach einmaliger Betätigung des Schalters für ein vorgegebenes Zeitintervall gesperrt ist.

## Claims

1. Change indicator for a water filter device having a replaceable filter cartridge, a cover with at least one filling opening which has a closure mechanism, wherein the change indicator cooperates with the closure mechanism, in that the opening and closing of the closure mechanism has an effect upon the change indicator such that the change indicator calculates, at least amongst other things from the opening and closing of the closure mechanism, when the filter cartridge is to be replaced, **characterised in that** the change indicator can be reset to a starting position via an actuation of the closure mechanism.

2. Change indicator for a water filter device as claimed in claim 1, **characterised in that** the change indicator can be reset via a repeated actuation of the closure mechanism in a specified time interval.

3. Change indicator for a water filter device as claimed in any one of the preceding claims, **characterised in that** the closure mechanism comprises a slide.

4. Change indicator for a water filter device as claimed in any one of the preceding claims, **characterised in that** the actuation of the closure mechanism is effected via a switch, in particular a reed switch.

5. Change indicator for a water filter device as claimed in the preceding claim, **characterised in that** the switch is disposed substantially in the slide.

6. Change indicator for a water filter device as claimed in any one of claims 4 to 5, **characterised in that** the switch cooperates with a magnet, in particular a magnet disposed on the cover.

7. Change indicator for a water filter device as claimed in any one of claims 4 to 6, **characterised in that** the switch can be actuated in a contactless manner.

8. Change indicator for a water filter device as claimed in the preceding claim, **characterised in that** an LCD display is disposed in the slide.

9. Change indicator for a water filter device as claimed in the preceding claim, **characterised in that** the display is concealed when the closure mechanism is closed.

10. Change indicator for a water filter device as claimed in any one of the preceding claims, **characterised in that** when the change indicator is not actuated it moves to a sleeping position in which in particular the display can be switched off.

11. Change indicator for a water filter device as claimed in any one of the preceding claims, **characterised in that** the change indicator comprises at least one integrated circuit (IC), in particular a microprocessor.

12. Change indicator as claimed in any one of the preceding claims, **characterised in that** the change indicator has a device for detecting the removal of the cover and the change indicator cooperates with the device to detect the removal of the cover,

13. Change indicator as claimed in any one of the preceding claims, **characterised in that** the change indicator comprises a device for detecting the removal of the filter cartridge and the change indicator cooperates with the device to detect the removal of the filter partridge.

14. Change indicator as claimed in any one of the preceding claims, **characterised in that** the change indicator cooperates with a device for measuring the water level in a container associated with the water filter device.

15. Change indicator for a water filter device as claimed in any one of the preceding claims, **characterised in that** after a one-time actuation of the switch the cooperation between the switch and the change indicator is blocked for a specified time interval.

## Revendications

1. Affichage réversible pour un dispositif de filtration d'eau comportant une garniture de filtre renouvelable, un couvercle avec au moins une ouverture de remplissage qui est pourvue d'un mécanisme de fermeture, ledit affichage réversible coopérant avec le mécanisme de fermeture en ce que l'ouverture et la fermeture du mécanisme de fermeture interviennent sur l'affichage réversible, de telle manière que l'affichage réversible calcule quand la garniture de filtre doit être changée, au moins et entre autres sur la base de l'ouverture et de la fermeture du mécanisme de fermeture, ledit affichage réversible étant **caractérisé en ce qu'**il peut être réinitialisé par actionnement du mécanisme de fermeture vers une position initiale.

2. Affichage réversible pour un dispositif de filtration d'eau selon la revendication 1, ledit affichage réversible étant **caractérisé en ce qu'**il peut être réinitialisé par actionnement répété plusieurs fois du mécanisme de fermeture, à intervalle temporel défini.

3. Affichage réversible pour un dispositif de filtration d'eau selon l'une des revendications précédentes, **caractérisé en ce que** le mécanisme de fermeture comprend un tiroir.

4. Affichage réversible pour un dispositif de filtration d'eau selon l'une des revendications précédentes, **caractérisé en ce que** le mécanisme de fermeture est actionné au moyen d'un interrupteur, en particulier d'un interrupteur à lames.

5. Affichage réversible pour un dispositif de filtration d'eau selon la revendication précédente, **caractérisé en ce que** l'interrupteur est sensiblement disposé dans le tiroir.

6. Affichage réversible pour un dispositif de filtration d'eau selon l'une des revendications 4 et 5, **caractérisé en ce que** l'interrupteur coopère avec un aimant, en particulier un aimant disposé contre le couvercle.

7. Affichage réversible pour un dispositif de filtration d'eau selon la revendication 4 à 6, **caractérisé en ce que** l'interrupteur peut être activé sans contact.

8. Affichage réversible pour un dispositif de filtration d'eau selon la revendication précédente, **caractérisé en ce qu'**un écran LCD est disposé dans un tiroir.

9. Affichage réversible pour un dispositif de filtration d'eau selon la revendication précédente, **caractérisé en ce que** l'écran est recouvert quand le mécanisme de fermeture est fermé.

10. Affichage réversible pour un dispositif de filtration d'eau selon l'une des revendications précédentes, ledit affichage réversible étant **caractérisé en ce qu'**il passe, en cas d'inactivation, en position de veille dans laquelle l'écran peut en particulier être éteint.

11. Affichage réversible pour un dispositif de filtration d'eau selon l'une des revendications précédentes, ledit affichage réversible étant **caractérisé en ce qu'**il comprend au moins un circuit intégré (IC), en particulier un microprocesseur.

12. Affichage réversible selon l'une des revendications précédentes, ledit affichage réversible étant **caractérisé en ce qu'**il comporte un dispositif de détection du retrait du couvercle, et ledit affichage réversible coopérant avec le dispositif de détection du retrait du couvercle.

13. Affichage réversible selon l'une des revendications précédentes, ledit affichage réversible étant **caractérisé en ce qu'**il comprend un dispositif de détection du retrait de la garniture de filtre, et ledit affichage réversible coopérant avec le dispositif de détection du retrait de la garniture de filtre.

14. Affichage réversible selon l'une des revendications précédentes, ledit affichage réversible étant **caractérisé en ce qu'**il coopère avec un dispositif de mesure du niveau d'eau dans un réservoir associé au dispositif de filtration d'eau.

15. Affichage réversible pour un dispositif de filtration d'eau selon l'une des revendications précédentes, **caractérisé en ce que** la coopération de l'interrupteur avec ledit affichage réversible est suspendue pendant un intervalle temporel défini après un unique actionnement de l'interrupteur.
